# EUROPÄISCHE PATENTANMELDUNG

(11) **EP 2 713 342 A2**
(43) Veröffentlichungstag der Anmeldung: **02.04.2014**
(21) Anmeldenummer: 13186445.6
(22) Anmeldetag: 27.09.2013
(51) Int. Cl.: G07C 5/08

(54) **Alarmeinrichtung für ein Tankfahrzeug sowie Tankfahrzeug**

(30) Priorität: 27.09.2012 DE 202012009281 U
(71) Anmelder: Saeta GmbH & Co. KG, 22880 Wedel (DE)
(72) Erfinder: Haar, Stefan, 25421 Pinneberg (DE)
(74) Vertreter: Hauck Patent- und Rechtsanwälte

(57) **Zusammenfassung**

Die Erfindung betrifft eine Alarmeinrichtung für ein Tankfahrzeug, insbesondere zum Betanken von Flugzeugen, die eine Sende- und Empfangseinrichtung zum Austausch von Daten mit einer Sende- und Empfangseinrichtung an dem Tankfahrzeug aufweist und die ferner mit einem Vibrationsalarm ausgestattet ist, der bei einem Empfang von Daten die Alarmeinrichtung vibrieren lässt. Ferner betrifft die Erfindung ein Tankfahrzeug.

## Beschreibung

Die vorliegende Erfindung betrifft eine Alarmeinrichtung für ein Tankfahrzeug sowie ein Tankfahrzeug, insbesondere zum Betanken von Flugzeugen. Derartige Tankfahrzeuge werden gelegentlich auch als Flugfeldtankfahrzeuge bezeichnet.

Tankfahrzeuge und insbesondere Flugfeldtankfahrzeuge besitzen eine Totmann-Kontrolle. Bei der Totmann-Kontrolle ist eine Schalteinrichtung vorgesehen, die bei der Betankung von Luftfahrzeugen betätigt werden muss und bei einer ausbleibenden Betätigung den Tankvorgang unterbricht. Insbesondere bei der Betankung von Luftfahrzeugen unter dem Flügel befindet sich die Bedienperson auf einer Betankungsplattform, die einen bequemen Zugang zum Betankungsanschluss am Luftfahrzeug ermöglicht. Hierbei muss die Bedienperson für den Betankungsvorgang die Totmann-Kontrolle kabelgebunden mit sich führen, wodurch die Bedienperson nur eine Hand frei hat. Im Übrigen kann es auch vorkommen, dass die Bedienperson Anzeigen und akustische Hinweise an dem Tankfahrzeug nicht wahrnehmen kann, da entweder die Sicht verstellt oder der Umgebungslärm auf dem Flugfeld zu groß ist.

Der Erfindung liegt die Aufgabe zugrunde, eine Alarmeinrichtung für ein Tankfahrzeug sowie ein Tankfahrzeug bereitzustellen, die mit einfachen Mitteln eine Verbindung zwischen der Bedienperson und dem Tankfahrzeug sicherstellt.

Erfindungsgemäß wird die Aufgabe durch eine Alarmeinrichtung mit dem Merkmal aus Anspruch 1 sowie ein Tankfahrzeug mit den Merkmalen aus Anspruch 6 gelöst.

Die erfindungsgemäße Alarmeinrichtung ist vorgesehen und bestimmt für ein Tankfahrzeug, insbesondere ein Flugfeldtankfahrzeug, das zum Betanken von Flugzeugen vorgesehen ist. Die Alarmeinrichtung besitzt eine Sende- und Empfangseinrichtung zum Austausch von Daten mit einer Sende- und Empfangseinrichtung an dem Tankfahrzeug. Die Sende- und Empfangseinrichtung des Tankfahrzeugs ist hierbei der Sende- und Empfangseinrichtung der Alarmeinrichtung zugeordnet, um Daten bidirektional austauschen zu können. Die Alarmeinrichtung besitzt erfindungsgemäß einen Vibrationsalarm, der bei einem Empfang von Daten die Alarmeinrichtung vibrieren lässt. Der Vibrationsalarm der Alarmeinrichtung hat den Vorteil, dass die mit der Alarmeinrichtung arbeitenden Bedienperson auf neu empfangene Daten hingewiesen und selbst bei großem Umgebungslärm als auch bei fehlendem Sichtkontakt zu dem Tankfahrzeug unmittelbar auf das Vorliegen von neu empfangenen Daten hingewiesen wird. Ein weiterer Vorteil besteht darin, dass die Alarmeinrichtung kabellos Daten und Steuersignale senden und empfangen kann und die Bedienperson sich daher frei bei dem Betankungsvorgang bewegen kann.

Bei einer bevorzugten Ausgestaltung ist die Alarmeinrichtung mit einem Armband ausgestattet, um wie eine Uhr am Handgelenk getragen zu werden. Alternativ oder zusätzlich zu einem Armband kann auch ein Halsband oder ein Trageband für das Handgelenk vorgesehen sein, um ein Mitführen der Alarmeinrichtung ohne diese in der Hand halten zu müssen zu ermöglichen. Der Vibrationsalarm an der Alarmeinrichtung gestattet es, die Bedienperson direkt auf das Vorliegen neuer Daten hinzuweisen.

In einer bevorzugten Ausgestaltung weist die Alarmeinrichtung einen ersten Taster auf, bei dessen Betätigung ein Totmann-Signal von der Sende- und Empfangseinrichtung des Tankfahrzeugs quittiert wird. Zum Quittieren des empfangenen Totmann-Signals wird ein Bestätigungssignal von der Alarmeinrichtung an die Sende- und Empfangseinheit des Tankfahrzeugs gesendet. Bei der vorliegenden Ausgestaltung, in der durch eine einmalige Betätigung des Tasters an der Alarmeinrichtung ein Totmann-Signal bestätigt wird, bekommt die Bedienperson die Möglichkeit, auf einen ständig mitgeführten Totmann-Schalter zu verzichten. Die Totmann-Kontrolle ist bevorzugt derart ausgelegt, dass in regelmäßigen Abständen wiederholt das von der Sende- und Empfangseinheit des Tankfahrzeugs angefragte Totmann-Signal zu bestätigen ist, so dass die Bedienperson in der verbleibenden Zeit frei mit beiden Händen arbeiten kann. Zudem entsteht gegenüber einem kabelgebundenen Betätigungselement für die Totmann-Kontrolle der Vorteil, dass die Bedienperson sich frei bewegen kann, wodurch Arbeiten beispielsweise mit einer erhöhten Arbeitsplattform unter dem Flügel des Flugzeugs erleichtert werden.

In einer weiteren bevorzugten Ausgestaltung ist die Alarmeinrichtung mit einem ersten Taster und einem Totmann-Zeitgeber ausgestattet. Der Totmann-Zeitgeber löst in zeitlichen Abständen den Vibrationsalarm aus. Hierbei ist es nicht notwendig, dass zur Totmann-Kontrolle zuvor ein Signal von der Sende- und Empfangseinheit des Tankfahrzeugs empfangen wird. Vielmehr wird das zu bestätigende Totmann-Signal durch den Totmann-Zeitgeber lokal in der Alarmeinrichtung ausgelöst. Der Totmann-Zeitgeber löst den Vibrationsalarm aus und eine Betätigung des ersten Tasters generiert ein Bestätigungssignal. Das Bestätigungssignal wird von der Sende- und Empfangseinrichtung der Alarmeinrichtung gesendet. Die Sende- und Empfangseinrichtung des Tankfahrzeugs quittiert ansprechend auf das empfangene Bestätigungssignal ein Totmann-Signal. Auch bei dieser Ausgestaltung kann die Bedienperson sich frei bewegen und hat beide Hände zum Arbeiten frei. Hinzu kommt, dass kein Totmann-Signal von dem Tankfahrzeug aus gesendet werden muss, sondern dieses lokal durch den Totmann-Zeitgeber in der Alarmeinrichtung generiert wird.

In einer weiteren bevorzugten Ausgestaltung ist die Alarmeinrichtung mit einem Display versehen, in dem empfangene Signale dargestellt werden. Hier bietet es sich beispielsweise an, während eines Betankungsvorgangs Druck, Betankungsmenge und Zustände am Tankfahrzeug und der darauf befindlichen Betankungseinrichtung aktuell anzuzeigen, wobei hierfür der Vibrationsalarm nicht ausgelöst wird, da die Bedienperson auf diese Informationen nicht unmittelbar reagieren kann.

In einer bevorzugten weiteren Ausgestaltung ist die Alarmeinrichtung mit mindestens einem weiteren Taster versehen, bei dessen Betätigung allein oder in Kombination ein Not-Aus oder weitere Funktionen zur Steuerung der Betankungseinrichtung an dem Tankfahrzeug ausgelöst werden. Die Bedienung mit dem weiteren Taster zur Steuerung der Betankungseinrichtung aus der Entfernung, beispielsweise von der Arbeitsplattform herab, kann die Arbeiten bei der Betankung wesentlich vereinfachen und im Falle des Not-Aus sogar Schäden und Gefahren durch eine verzögerte Betätigung des Not-Aus-Schalters vermeiden.

Die erfindungsgemäße Aufgabe wird ebenfalls durch ein Tankfahrzeug, insbesondere ein Flugfeldtankfahrzeug zum Betanken von Flugzeugen gelöst. Das Tankfahrzeug besitzt eine Sende- und Empfangseinrichtung und eine der Sende- und Empfangseinrichtung zugeordnete Alarmeinrichtung. Die Alarmeinrichtung selbst ist ebenfalls mit einer Sende- und Empfangseinrichtung zum Austauschen von Daten mit der Sende- und Empfangseinrichtung des Tankfahrzeugs ausgestattet. Die Alarmeinrichtung besitzt einen Vibrationsalarm, der ansprechend auf empfangene Daten die Alarmeinrichtung vibrieren lässt. Durch den Vibrationsalarm an der Alarmeinrichtung kann eine die Alarmeinrichtung tragende Bedienperson in jeder Situation gut angesprochen und auf neu vorliegende Daten hingewiesen werden. Selbst bei großem Lärm und fehlendem Sichtkontakt zu einzelnen Stellen an dem Tankfahrzeug und dessen Betankungseinrichtung ist somit ein Ansprechen der Bedienperson möglich.

Bevorzugt ist die Alarmeinrichtung mit einem Armband ausgestattet, um nach Art einer Uhr am Handgelenk getragen zu werden.

In einer bevorzugten Ausgestaltung sendet die Sende- und Empfangseinrichtung des Tankfahrzeugs während des Betankungsvorgangs wiederholt ein Totmann-Signal aus, auf das ansprechend die Alarmeinrichtung vibriert und durch Betätigung eines Tasters die Möglichkeit gibt, das empfangene Totmann-Signal zu quittieren. Die Sende- und Empfangseinrichtung der Alarmeinrichtung sendet beim Quittieren ein Bestätigungssignal aus, auf das ansprechend die Sende- und Empfangseinheit des Tankfahrzeugs ein Auslösen einer Totmann-Schaltung an dem Tankfahrzeug verhindert bis ein erneutes Totmann-Signal ausgesendet wird. Zwischen Aussenden des Totmann-Signals und Empfangen des Bestätigungssignals, kann ein definiertes Zeitintervall vorgesehen sein, das abgewartet wird, bevor die Totmann-Schaltung an dem Tankfahrzeug aktiviert wird und den Tankvorgang abbricht.

In einer weiteren bevorzugten Ausgestaltung ist die dem Tankfahrzeug zugeordnete Alarmeinrichtung mit einem ersten Taster und einem Totmann-Zeitgeber ausgestattet. Der Totmann-Zeitgeber löst in zeitlichen Abständen einen Vibrationsalarm aus. Eine Bedienung des ersten Tasters generiert ein Bestätigungssignal, das von der Sende- und Empfangseinrichtung der Alarmeinrichtung gesendet wird und auf das ansprechend die Sende- und Empfangseinrichtung eines Tankfahrzeugs ein Totmann-Signal quittiert. Bei dieser Ausgestaltung kann darauf verzichtet werden, ein Totmann-Signal von der Sende- und Empfangseinrichtung des Tankfahrzeugs an die Alarmeinrichtung zu senden. Über den Totmann-Zeitgeber wird lokal in der Alarmeinrichtung ein Vibrationsalarm ausgelöst, der durch den ersten Taster bestätigt wird, so dass ein entsprechendes Bestätigungssignal an das Tankfahrzeug und seine Tankeinrichtung gesendet wird.

In einer bevorzugten Ausgestaltung besitzt die Alarmeinrichtung ein Display, um relevante Informationen und Daten zu dem Betankungsvorgang anzuzeigen. Zweckmäßigerweise ist die Alarmeinrichtung mit mindestens einem weiteren Taster ausgestattet, bei dessen Betätigung allein oder in Kombination mit einem oder mehreren anderen Tastern ein Not-Aus-Signal oder Signale zu weiteren Funktionen zur Steuerung der Betankungseinrichtung an die Sende- und Empfangseinheit des Tankfahrzeugs gesendet werden, die ansprechend auf das empfangene Signal die Betankungseinrichtung entsprechend steuert. Das ferngesteuerte Betankungsfahrzeug besitzt den Vorteil, dass schnell von einer erhöht liegenden Arbeitsplattform aus auf eine Situation reagiert werden kann, die ein Eingriff an der Betankungseinrichtung erforderlich macht.

Die Erfindung wird nachfolgend an einem Ausführungsbeispiel näher erläutert.
- Fig. 1: zeigt in einer schematischen Ansicht ein Flugfeldbetankungsfahrzeug bei einem Betankungsvorgang unter dem Flügel, und
- Fig. 2: zeigt in einer schematischen Ansicht eine erfindungsgemäße Alarmeinrichtung mit einem großen Display.

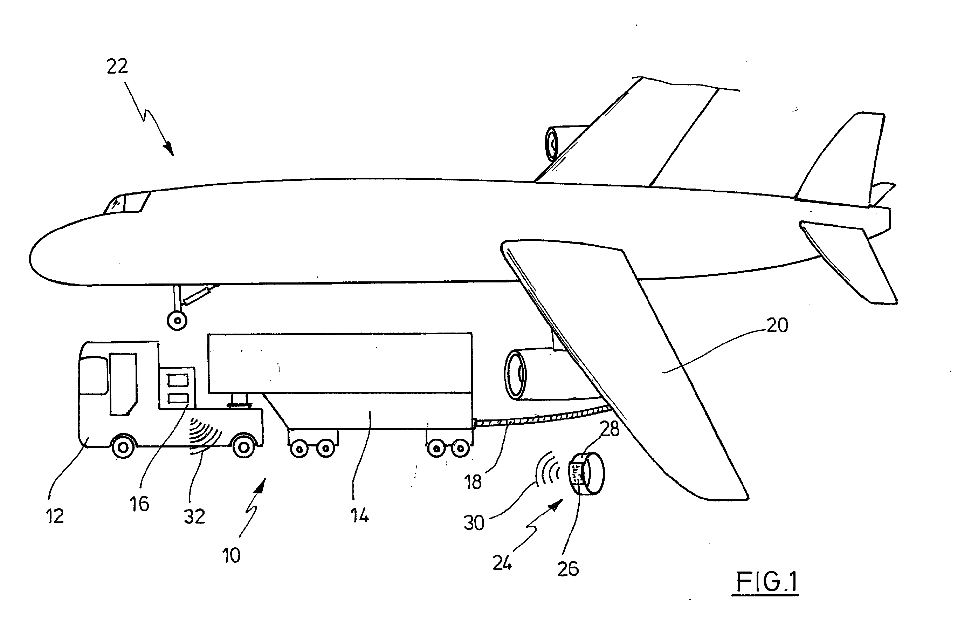

Fig. 1 zeigt ein Flugfeldbetankungsfahrzeug 10 mit einem angetriebenen Schleppfahrzeug 12 und einem nicht angetriebenen Tankanhänger 14 in einer schematischen Ansicht. Die Steuereinrichtung 16 für den Betankungsvorgang ist schematisch an dem Schleppfahrzeug 12 dargestellt. Grundsätzlich kann diese auch Bestandteil des nicht angetriebenen Tankanhängers 14 sein. Der Anhänger 14 ist über einen flexiblen Tankschlauch 18 mit einem Betankungsanschluss (nicht dargestellt) unter dem Flügel 20 des Flugzeuges 22 verbunden. Das erfindungsgemäße Flugfeldtankfahrzeug ist nicht auf eine Betankung unter dem Flügel beschränkt. Bei anderen Flugzeugtypen kann eine Betankung auch auf dem Flügel oder am Rumpf des Flugzeuges erfolgen.

Eine Bedienperson befindet sich bei einem Betankungsvorgang unter dem Flügel in der Regel auf einer erhöhten Arbeitsplattform (nicht dargestellt) nahe dem Betankungsanschluss. Die Bedienperson trägt eine Alarmeinrichtung 24 am Handgelenk, die ein Display 26 und ein Armband 28 besitzt. Über Funksignale 30 und Funksignale 32 steht die Alarmeinrichtung 24 mit der Steuereinrichtung 16 in Funkverbindung. Hierbei können die unterschiedlichsten Funkprotokolle und die unterschiedlichsten Arten von Funkverbindungen eingesetzt werden.

Eine in der Steuereinrichtung 16 vorgesehene Totmann-Schaltung sendet während des Betankungsvorgangs in zeitlich regelmäßigen Abständen ein Funksignal 32 aus, das von der Alarmeinrichtung 24 empfangen wird. Die Alarmeinrichtung 24 löst daraufhin einen Vibrationsalarm aus. Alternativ hierzu ist es auch möglich, die Alarmeinrichtung mit einem Totmann-Zeitgeber auszustatten, der den Vibrationsalarm auslöst. Innerhalb einer vorgegebenen Zeitdauer muss die Bedienperson durch eine Bestätigung eines Tasters an der Alarmeinrichtung den Vibrationsalarm quittieren. Hierzu wird ein Bestätigungssignal 32 an die Steuereinrichtung 16 gesendet, die nach Empfang des Bestätigungssignals ein Auslösen der Totmann-Schaltung verhindert. Nach einem Aussenden des Totmann-Signals wartet die Steuereinrichtung 16 für eine vorbestimmte Zeitdauer auf das Bestätigungssignal. Ebenso wartet die Steuereinrichtung 16 für eine vorbestimmte Zeitdauer ab, wenn ein Totmann-Zeitgeber in der Alarmeinrichtung vorgesehen ist. Erst nach Überschreiten der Zeitdauer wird ein Alarm ausgelöst und nach einer weiteren Zeitspanne der Tankvorgang abgebrochen. Empfängt die Steuereinrichtung 16 das Bestätigungssignal, so wird nach einer gewissen Zeitspanne ein erneutes Totmann-Signal gesendet. Bevorzugt sind die Zeitintervalle an der Steuereinrichtung einstellbar.

Zudem kann vorgesehen sein, dass die Alarmeinrichtung 24 auch beispielsweise über die Betätigung von weiteren Knöpfen ein Not-Aus oder eine sonstige Steuerfunktion an der Steuereinheit 16 auslöst. Vorgesehen ist auch, dass die Steuereinheit 16 an dem Flugfeldbetankungsfahrzeug regelmäßig Signale 32 an die Alarmeinrichtung 24 schickt, aus denen die Alarmeinrichtung 24 Informationen zu dem Betankungsvorgang generiert. So kann beispielsweise der Betankungsdruck und/oder das Betankungsvolumen kontinuierlich an der Alarmeinrichtung 24 dargestellt werden. Ebenso können Steuersignale für die Betankungseinrichtungen wie beispielsweise Pumpe, Dieselmotor, Flow Rate von der Alarmeinrichtung generiert werden. Bei der Übertragung dieser Daten und Steuerbefehle erfolgt kein Vibrationsalarm an der Alarmeinrichtung.

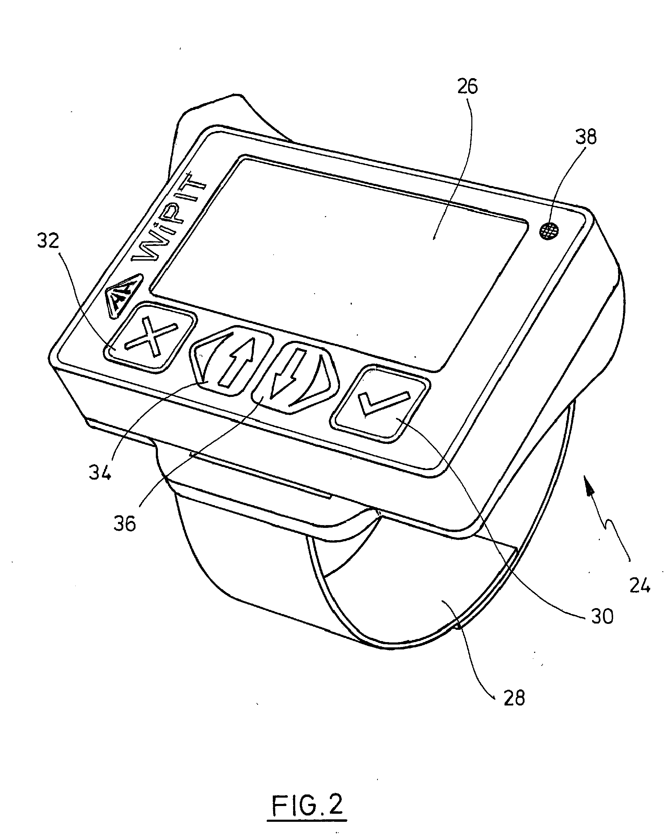

Fig. 2 zeigt eine Detailansicht einer beispielhaft ausgeführten Alarmeinrichtung 24, die ein Display 26 und ein Armband 28 besitzt. Neben dem Display 26 sind vier Taster 30 vorgesehen, über die eine Eingabe in die Alarmeinrichtung erfolgen kann. Beispielsweise kann über den Taster 30 ein Bestätigungssignal für ein empfangenes oder lokal erzeugtes Totmann-Signal gesendet werden. Über die Taster 34 und 36 können die in dem Display 26 dargestellten Informationen gewechselt werden bzw. zwischen den Informationen umgeschaltet werden. Zusätzlich ist die Alarmeinrichtung mit einem Lautsprecher und/oder Mikrofon 38 versehen, über das gegebenenfalls auch eine akustische Kommunikation möglich ist. Über den Taster 32 kann eine dargestellte Menüfunktion beendet werden. Mit der Darstellung von einzelnen Menüpunkten, zwischen denen auch über die Taster 34 und 36 gewechselt werden kann, wird zwischen einer Darstellung der empfangenen aktuellen Werte des Betankungsvorgangs wie beispielsweise Literzahl und Durchflussmenge und einem Menü mit Steuerbefehlen für die Pumpe, den Dieselmotor, die Flow Rate und dergleichen an der Betankungseinrichtung umgeschaltet.

## Patentansprüche

1. Alarmeinrichtung für ein Tankfahrzeug, insbesondere zum Betanken von Flugzeugen, die eine Sende- und Empfangseinrichtung zum Austausch von Daten mit einer Sende- und Empfangseinrichtung an dem Tankfahrzeug aufweist und die ferner mit einem Vibrationsalarm ausgestattet ist, der bei einem Empfang von Daten die Alarmeinrichtung vibrieren lässt.

2. Alarmeinrichtung nach Anspruch 1, **dadurch gekennzeichnet, dass** die Alarmeinrichtung mit einem Armband versehen ist, um an dem Handgelenk getragen werden zu können.

3. Alarmeinrichtung nach Anspruch 1 oder 2, **dadurch gekennzeichnet, dass** ein erster Taster vorgesehen ist, bei dessen Betätigung ein Totmann-Signal von der Sende- und Empfangseinrichtung des Tankfahrzeugs quittiert wird, indem ein Bestätigungssignal gesendet wird.

4. Alarmeinrichtung nach Anspruch 1 oder 2, **dadurch gekennzeichnet, dass** ein erster Taster und ein Totmann-Zeitgeber vorgesehen sind, wobei der Totmann-Zeitgeber in zeitlichen Abständen den Vibrationsalarm auslöst und eine Betätigung des ersten Tasters ein Betätigungssignal auslöst, das von der Sende- und Empfangseinrichtung der Alarmeinrichtung gesendet wird und auf das ansprechend die Sende- und Empfangseinrichtung des Tankfahrzeugs ein Totmann-Signal quittiert.

5. Alarmeinrichtung nach einem der Ansprüche 1 bis 4, **dadurch gekennzeichnet, dass** ein Display vorgesehen ist, in dem empfangene Signale und/oder Daten dargestellt werden.

6. Alarmeinrichtung nach einem der Ansprüche 1 bis 5, **dadurch gekennzeichnet, dass** mindestens ein weiterer Taster vorgesehen ist, bei dessen Betätigung ein Not-Aus und/oder eine Steuerfunktion an dem Tankfahrzeug ausgelöst werden.

7. Tankfahrzeug insbesondere zum Betanken von Flugzeugen, das eine Sende- und Empfangseinrichtung und eine der Sende- und Empfangseinrichtung zugeordnete Alarmeinrichtung aufweist, die zum Austausch von Daten mit der Sende- und Empfangseinrichtung an dem Tankfahrzeug ebenfalls eine Sende- und Empfangseinrichtung aufweist, wobei die Alarmeinrichtung einen Vibrationsalarm aufweist, der ansprechend auf empfangenen Daten die Alarmeinrichtung vibrieren lässt.

8. Tankfahrzeug nach Anspruch 6, **dadurch gekennzeichnet, dass** die Alarmeinrichtung ein Armband aufweist, um am Handgelenk getragen zu werden.

9. Tankfahrzeug nach Anspruch 6 oder 7, **dadurch gekennzeichnet, dass** die Sende- und Empfangseinrichtung bei einem Betankungsvorgang wiederholt ein Totmann-Signal sendet und die Alarmeinrichtung das empfangene Totmann-Signal über eine Betätigung eines Tasters quittieren kann, wobei die Sende- und Empfangseinrichtung der Alarmeinrichtung ein Bestätigungssignal sendet, auf das ansprechend die Sende- und Empfangseinheit des Tankfahrzeugs ein Auslösen einer Totmann-Schaltung an dem Tankfahrzeug verhindert.

10. Tankfahrzeug nach einem der Ansprüche 7 bis 8, **dadurch gekennzeichnet, dass** die Alarmeinrichtung einen ersten Taster und einen Totmann-Zeitgeber aufweist, der in zeitlichen Abständen den Vibrationsalarm auslöst und eine Betätigung des ersten Tasters ein Betätigungssignal auslöst, das von der Sende- und Empfangseinrichtung der Alarmeinrichtung gesendet wird und auf das ansprechend die Sende- und Empfangseinrichtung des Tankfahrzeugs ein Totmann-Signal quittiert.

11. Tankfahrzeug nach einem der Ansprüche 7 bis 10, **dadurch gekennzeichnet, dass** die Alarmeinrichtung ein Display aufweist.

12. Tankfahrzeug nach einem der Ansprüche 7 bis 11, **dadurch gekennzeichnet, dass** die Alarmeinrichtung mindestens einen weiteren Taster aufweist, bei dessen Betätigung ein Not-Aus-Signal und/oder Steuersignale an die Sende- und Empfangseinheit des Tankfahrzeugs gesendet werden, das ansprechend auf das empfangene Not-Aus-Signal ein Not-Aus für den Betankungsvorgang auslöst.
